# EUROPEAN PATENT APPLICATION

(11) **EP 1 282 030 A1**
(43) Date of publication of application: **05.02.2003**
(21) Application number: 01926134.6
(22) Date of filing: 07.05.2001
(51) Int. Cl.: G06F 1/32

(54) **COMPUTER SYSTEM AND COMPUTER-READABLE RECORDING MEDIUM**

(30) Priority: 08.05.2000 JP 2000135147
(71) Applicant: MITSUBISHI DENKI KABUSHIKI KAISHA, Tokyo 100-8310 (JP)
(72) Inventor: KUROSAWA, Hisayoshi, MITSUBISHI DENKI K.K., Tokyo 100-8310 (JP)
(74) Representative: Pfenning, Meinig & Partner
(86) International application number: JP0103821
(87) International publication number: WO01086401

(57) **Abstract**

A central processing unit is provided with a plurality of power saving modes so that an optimum power saving mode determined by an interval between requested time-out interruptions is selected.

## Description

### TECHNICAL FIELD

The present invention relates to a computer system provided with a central processing unit having, in addition to a normal mode, a plurality of power saving modes characterized by difference levels of power consumption and to a computer readable recording medium readable by such a system. More particularly, the invention relates to a computer system capable of effectively reducing power consumption while an application is being executed, by appropriately switching between the plurality of power saving modes of the central processing unit while appropriately executing jobs based on time-out interruptions.

### BACKGROUND ART

Sophisticated performance of application programs recently used requires that a central processing unit executing the program be provided with a high-level processing performance. As a result, many central processing units are now operated at an increasingly high speed. The resultant increase in power consumed in the central processing unit now presents a serious challenge in building a system using the central processing unit.

A computer system provided with a function of reducing power consumption of a central processing unit is disclosed, for example, in Japanese Laid-Open Patent Application No. 11-184550. A computer system using a difference timer is also proposed elsewhere.

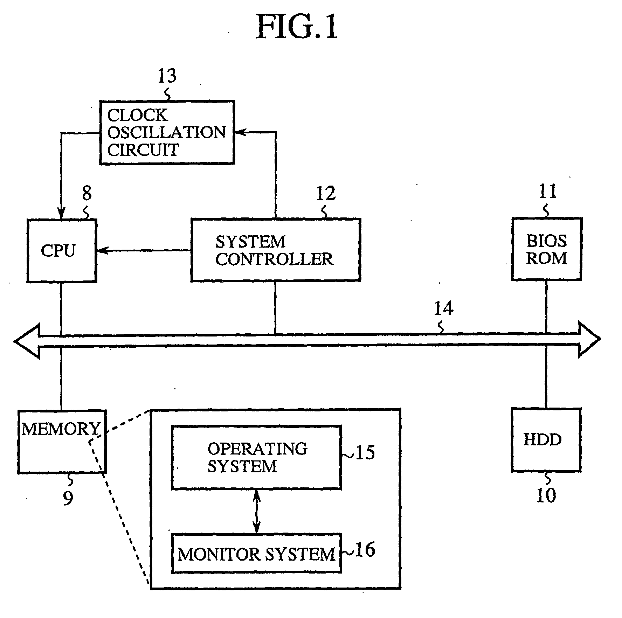

Fig. 1 shows a construction of a related-art computer system disclosed in Japanese Laid-Open Patent Application No. 11-184550. Referring to Fig. 1, the system comprises a central processing unit (CPU) 8, a memory 9, a hard disk drive (HDD) 10, a basic input and output system read-only memory (BIOSROM) 11, a system controller 12, a clock oscillation circuit 13, a system bus 14, an operating system program 14, and a monitor system program 16.

A description will now be given of the operation according to the related art.

The central processing unit 8 performs predetermined processes in accordance with the operating system program stored in the memory 9. When in an idle state, the central processing unit 8 notifies the system controller 12 of the CPU usage rate. The system controller 12 controls intervals between timer interruptions presented to the central processing unit 8 and an oscillation frequency of the clock oscillation circuit 13. More specifically, as the idle time becomes extended and the usage rate becomes low, the intervals between timer interruptions are extended and the oscillation frequency is lowered, thereby reducing the power consumption by the central processing unit 8.

The aforementioned system using a difference timer sets, in a timer means, a difference time indicating a period of time that elapses since the immediately preceding time-out interruption. The operation of the central processing unit is switched between a power saving mode and a normal mode, based on a time-out interruption of the timer means.

In the related-art systems constructed as described above, various measures directed to low power consumption of the central processing unit 8 are employed. However, these measures fail to provide effective and satisfactory solutions.

For example, in the system disclosed in Laid-Open Application, a minimum interval between interruptions (i.e. interruption interval at an initial state) should be set so that it is smaller than the smallest transition interval between two states occurring in a system in which the technology of the Laid-Open Application is applied, in order to properly differentiate between two states that occur in succession. As a result, even when a situation arises in which a time interval between different states becomes significantly large, unnecessary interruptions occur repeatedly, causing the central processing unit 8 to operate each time and wasting the power accordingly.

Further, by setting a small time interval, the central processing unit 8 is required to return to its operation at the small interval to perform an interruption process. Thus, it is not expected that the processing speed of the central processing unit 8 drops in any substantial manner. A considerable reduction in power consumption cannot be hoped for by switching to the power saving mode. In the aforementioned system using a difference timer, too, the central processing unit is expected to perform an interruption process by returning to operation at the minimum interval defined by the system. Thus, it is not expected that the processing speed of the central processing unit 8 drops in any substantial manner. An appreciable reduction in power consumption cannot be hoped for by switching to the power saving mode.

The present invention has been developed in view of the aforementioned problems and has an objective of providing a computer system provided with a central processing unit having, in addition to a normal mode, a plurality of power saving modes with difference power consumption levels, the computer system being suitably adapted for a battery-driven operation by providing the capability of effectively reducing power consumption of the central processing unit while an application is being executed, by switching between the plurality of power saving modes and executing jobs appropriately based on time-out interruptions. Another object is to provide a recording medium readable by such a system.

### DISCLOSURE OF THE INVENTION

The present invention provides a computer system comprising: a central processing unit provided, in addition to a normal mode, with a plurality of power saving modes characterized by respective power consumption levels, and sequentially executing a plurality of jobs generating associated time-out interruption requests; storage means storing a return time table mapping the plurality of power saving modes of the central processing unit into respective return time required for the central processing unit to return from the corresponding power saving mode to the normal mode; list updating means updating a time-out list, chronologically listing the time-out interruption requests, based on the time-out interruption requests from the plurality of jobs executed by the central processing unit; timer means outputting time-out interruptions to the central processing unit when the time-out time listed in the time-out list elapses; setting means setting a next time-out time in the timer means whenever a time-out interruption occurs in accordance with the order listed in the time-out list; transition mode selection means referring to the return time table when the central processing unit is put in an idle state, and selecting, as a transition mode, a power saving mode having the longest return time, from a group of one or a plurality of power saving modes having a return time shorter than the time-out time designated for the subsequent time-out interruption; and operation mode control means controlling the central processing unit to operate in the transition mode since the start of the idle state until an input of the subsequent time-out interruption, and returning the central processing unit to the normal mode when the time-out interruption is generated.

According to this aspect of the invention, the central processing unit is operated in a power-saving mode having the longest return time of a plurality of power-saving modes provided in the central processing unit, the maximum of the return time being defined by the interval between time-out interruptions.

Moreover, it is possible to suitably employ the power-saving mode having a return time longer than that of the power-saving mode in which the processing unit returns to a normal mode before the shortest interruption interval occurring in the system expires so as to perform an interruption process. Accordingly, power consumption in the corresponding period is reduced. Further, since the time-out time of the jobs is managed based on the time-out list such that the time-out interruption occurs at the designated time, unnecessary interruptions are prevented from occurring in the period in which the processing unit is set to the power-saving mode, providing further reduction in power consumption.

The power-saving mode is selected such that the central processing unit is returned to a normal mode before the next interruption occurs so that the central processing unit is capable of executing the process for the preceding interruption prior to the occurrence of the next interruption. Thus, two successive time-out interruptions are appropriately processed as separate time-out interruptions.

The computer system is capable of effectively reducing power consumption while an application is being executed, by appropriately switching between the plurality of power saving modes of the central processing unit while appropriately executing jobs based on time-out interruptions.

The present invention also provides a computer system comprising: transition mode selection means referring to the return time table when the central processing unit is put in an idle state, and selecting, as a transition mode, a power saving mode having the longest return time from a group of one or a plurality of power saving modes having a return time shorter than a period of time that remains until the subsequent time-out interruption; and remaining time setting means setting a period of time that remains after subtracting the return time of the transition mode from the remaining time.

With this, it is ensured that the processing unit is returned to a normal mode at the time of time-out interruption requested from the job. Therefore, the central processing unit is capable of executing the job at a desired speed at the requested timing. Extension of time required for completion of the job is prevented. The performance of the central processing unit is prevented from dropping.

According to the invention, the list updating means may update a time-out list listing, for each job requesting a time-out interruption, a difference time from the immediately preceding time-out interruption and a permitted error time permitted for the occurrence of the time-out interruption from the listed job. When it is determined, in setting a next time-out time subsequent to the time-out interruption, that the difference time is longer than the permitted error time, the setting means may successively examine the listed jobs until an accumulation of the difference time is longer than the permitted error time associated with the job, so as to set an accumulated time immediately preceding the satisfaction of the above-mentioned criterion. The central processing unit may successively execute, at the time-out interruption, time-out interruption processes from jobs including the last examined job.

With this, the frequency of time-out interruptions is reduced. A plurality of idle periods are combined into a single idle period, thereby enabling selection of a power-saving mode characterized by smaller power consumption than when the idle periods are separate. Thus, power consumption is further reduced.

The list updating means may update the time-out list when there is a time-out interruption request from a new job such that the new job is added to the time-out list at a proper location determined by a time-out interruption request time, and combining time-out interruptions when an error time permitted for the occurrence of the time-out interruption from the new job is longer than a difference in time between the new job and an immediately preceding time-out interruption or a difference in time between the new job and an immediately following time-out interruption, such that the immediately preceding time-out interruption or the immediately following time-out interruption is processed as a time-out interruption from the new job.

With this, the frequency of time-out interruptions is reduced. A plurality of idle periods are combined into a single idle period, thereby enabling selection of a power-saving mode characterized by smaller power consumption than when the idle periods are separate. Thus, power consumption is further reduced.

The present invention provides a computer readable recording medium storing a program causing a computer to function as: table storage control means causing storage means to store a return time table mapping each of a plurality of power saving modes of a central processing unit into a respective return time required for the central processing unit to return to a normal mode; list updating means updating a time-out list, chronologically listing the time-out interruption requests, based on the time-out interruption requests from the plurality of jobs executed by the central processing unit; setting means setting a next time-out time in the timer means whenever a time-out interruption occurs in accordance with the order listed in the time-out list; transition mode selection means referring to the return time table when the central processing unit is put in an idle state, and selecting, as a transition mode, a power saving mode having the longest return time, from a group of one or a plurality of power saving modes having return times shorter than the time-out time set designated for the subsequent time-out interruption; and operation mode control means controlling the central processing unit to operate in the transition mode since the start of the idle state until an input of the subsequent time-out interruption, and returning the central processing unit to the normal mode when the time-out interruption is generated.

With this, it is possible to provide the list updating means, the setting means, the transition mode selection means, the operation mode control means in a computer-readable recording medium together with the table storage control means for causing the return time table to be stored in the storage means.

The computer readable recording medium may store a program causing the computer to function as transition mode selection means referring to the return time table when the central processing unit is put in an idle state, and selecting, as a transition mode, a power saving mode having the longest return time from a group of one or a plurality of power saving modes having a return time shorter than a period of time that remains until the subsequent time-out interruption; and remaining time setting means setting a period of time that remains after subtracting the return time of the transition mode from the remaining time.

With this, it is possible to provide the list updating means, the setting means, the transition mode selection means, the operation mode control means in a computer-readable recording medium together with the table storage control means for causing the return time table to be stored in the storage means.

### BRIEF DESCRIPTION OF THE DRAWINGS

Fig. 1 shows a construction of a system showing a construction of a related-art computer system;
Fig. 2 is a block diagram showing a hardware construction of a computer system according to a first embodiment of the present invention;
Fig. 3 is a return time table stored in a recording medium according to the first embodiment;
Fig. 4 is a main flowchart showing an operation of an operating system stored in the recording medium according to the first embodiment;
Fig. 5 is a flowchart showing a branch process performed when it is determined in step of the first embodiment for creation of a branch that a time-out interruption is input in the form of an event;
Fig. 6 shows an example of time-out list according to the first embodiment;
Fig. 7 is a timing chart showing an example of operation executed according to the first embodiment by a central processing unit in accordance with the time-out list of Fig. 6;
Fig. 8 is a flowchart showing a branch process performed when it is determined in step of the second embodiment for creation of a branch that a time-out interruption is input in the form of an event;
Fig. 9 is a timing chart showing an example of operation executed according to the second embodiment by a central processing unit in accordance with the time-out list of Fig. 6;
Fig. 10 is a flowchart showing a branch process performed when it is determined in step of the third embodiment for creation of a branch that a time-out interruption is input in the form of an event;
Fig. 11 shows an example of time-out list according to the third embodiment;
Fig. 12 is a timing chart showing an example of operation executed according to the third embodiment by a central processing unit in accordance with the time-out list of Fig. 11;
Fig. 13 is a flowchart showing a branch process performed when it is determined in step of the fourth embodiment for creation of a branch that a time-out interruption is input in the form of an event; and
Fig. 14 shows how a list is updated in a time-out list updating step of the fourth embodiment.

### BEST MODE OF CARRYING OUT THE INVENTION

Hereinafter, in order to describe the invention in further detail, the best mode of carrying out the invention will be described with reference to the attached drawings.

### First embodiment

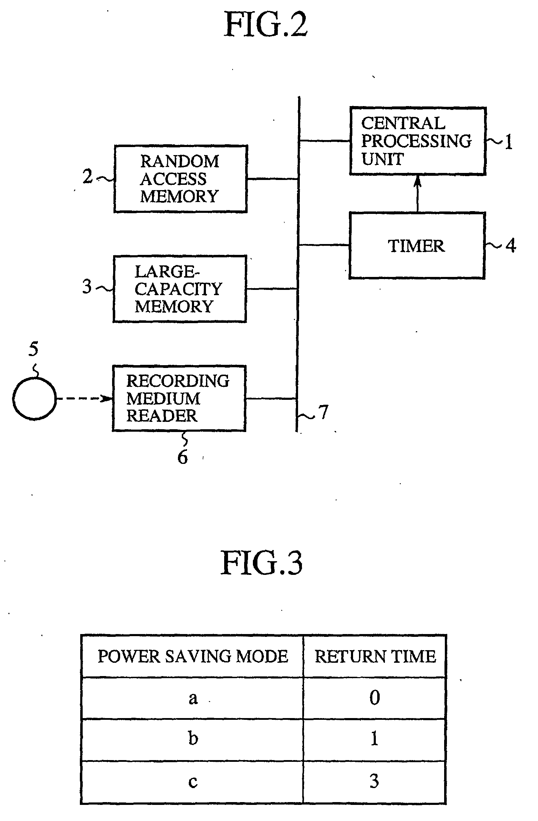

Fig. 2 is a block diagram showing a hardware construction of a computer system according to a first embodiment of the present invention. Referring to Fig. 2, the system comprises a central processing unit 1 provided, in addition to a normal mode, with a plurality of power saving modes characterized by respective power consumption levels and sequentially executing a program in units of jobs, a random access memory 2 in which a program execution area is set up for the central processing unit 1, a large-capacity memory 3 (storage means) such as a hard disk drive for storing a program etc., a timer (timer means) 4 outputting a time-out interruption to the central processing unit 1 when a preset period of time elapses, a recording medium 5 storing an operating system (OS) executed by the central processing unit 1, an application program (AP) executed on the OS, and various data. Reference numeral 6 indicates a recording medium reader for reading data from the recording medium and 7 indicates a system bus for input and output of data exchanged between the central processing unit 1, the random access memory 2, the large-capacity memory 3, the timer 4 and the recording medium reader 6.

Fig. 3 is a return time table stored in a recording medium 5 according to the first embodiment. The left column of the table lists power saving modes provided in the central processing unit 1 and the right column lists return time required for the power saving mode to return to the normal mode. The table of Fig. 3 shows that the central processing unit 1 is provided with three power saving modes a, b, c characterized by reduced power consumption, in addition to the normal mode in which the central processing unit 1 is operated at the full operating power. Units of time "0", "1" and "3" are required for the respective power saving modes to return to the normal mode. The longer the period of time required before a return, the smaller the power consumption in the power saving mode.

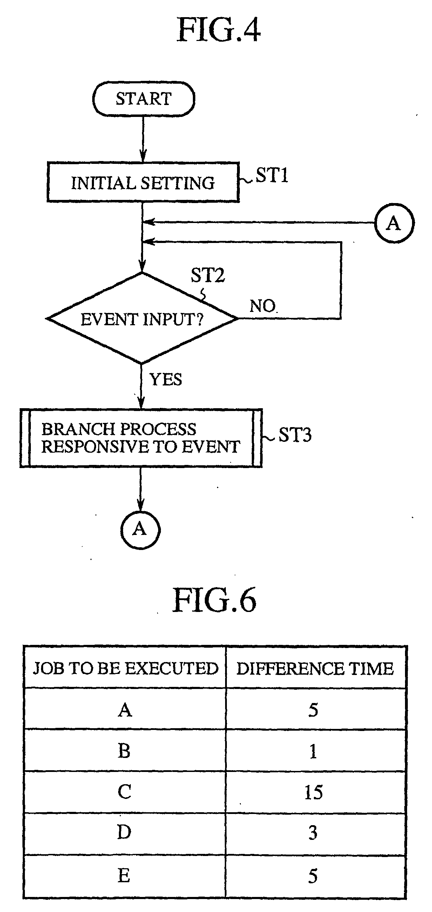

Fig. 4 is a main flowchart showing an operation of an operating system stored in the recording medium according to the first embodiment. Referring to Fig. 4, ST1 is an initial setting step wherein execution areas and the return time table are set up in the random access memory 2 in response to the start of the OS, and various environmental settings are established so that the AP is operated on the OS in response to an input of an event. Step ST2 is an event input determination step wherein a determination is made as to whether there is an input from a key (not shown) or the like. Step ST3 is for creation of a branch wherein a determination is made on the type of event so that a job adapted for the event type is executed.

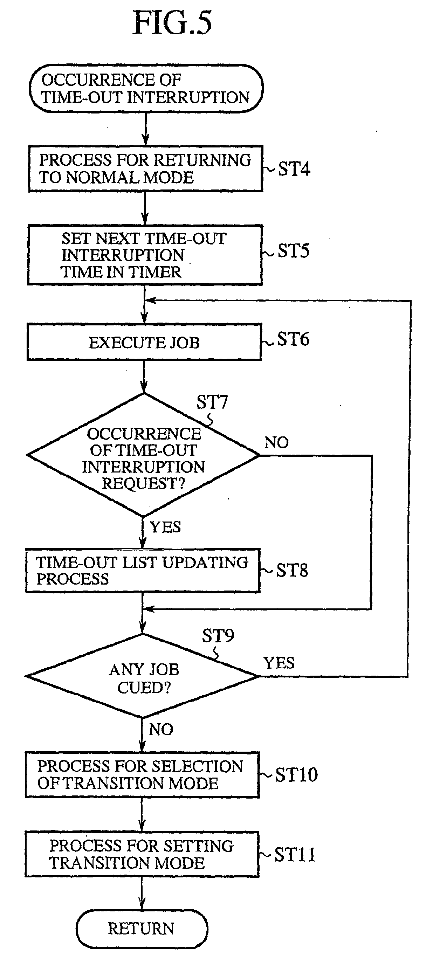

Fig. 5 is a flowchart showing a branch process performed when it is determined in step ST3 of the first embodiment that a time-out interruption is input in the form of an event. Referring to Fig. 5, step ST4 is a return process step wherein the central processing unit 1 is returned from the power saving mode to the normal mode (operation mode control means). Step ST5 is a setting process step wherein a point of time at which the next time-out interruption is expected is set in the timer 4 (setting means). Step ST6 is a job execution step wherein a job that requested the time-out interruption is executed. Step ST7 is a time-out interruption request determination step wherein a determination is made as to whether a new time-out interruption request is generated as a result of executing the job in the execution step ST6. Step ST8 is a time-out list updating step wherein a new time-out interruption request is added to the time-out list (list updating means). Step ST9 is a cued job determination step wherein a determination is made as to whether there is a cued job to be executed subsequently. Step ST10 is a transition mode selection step (transition mode selection means) wherein a power saving mode, in which the central processing unit 1 should be operated in a transition time prior to the expected time-out interruption input, is selected. The selected mode is designated as a transition mode. Step ST11 is a transition mode setting step wherein the transition mode is set in the central processing unit 1 (operation mode control means).

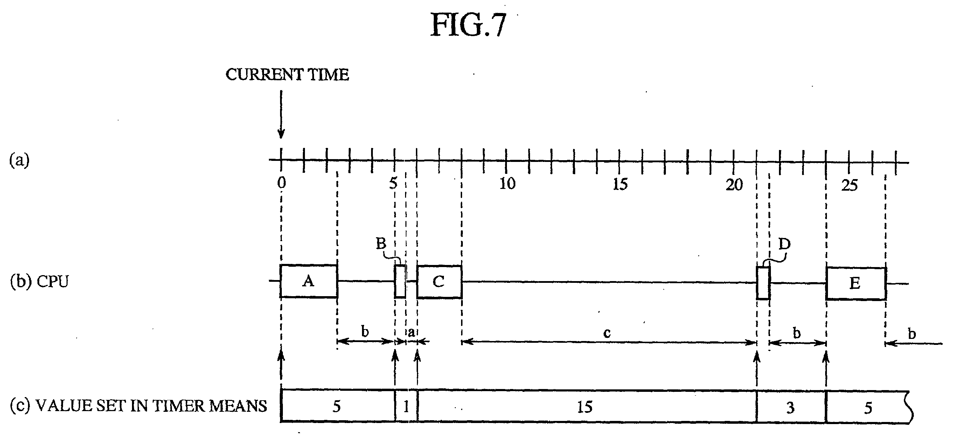

The time-out list updated in step ST8 may be a sequential list of the time-out interruption requests not yet processed, and the associated information specifying the timing of the time-out interruptions. For example, the time-out list may be as shown in Fig. 6 in a computer readable format. Referring to Fig. 6, the left column lists jobs that generated time-out interruption requests in the order of occurrence of the time-out interruption requests. The right column lists differences in time (difference time) between a time-out interruption from a job on a given row and an expected time-out interruption from a job in the next row. By using the table described above and formatted as computer readable data, when a time-out interruption occurs, the job located at the head of the data is executed after an elapse of the designated difference time. The job executed is removed from the list so that the job to be executed (selected) next and the associated difference time is placed at the head of the list.

In the transition mode selection step ST10 of the first embodiment, the return time table is referred to so as to select, as the transition mode, a power saving mode having the longest return time, from a group of one or a plurality of power saving modes having a return time shorter than the difference time designated for the occurrence of the next time-out interruption (the difference time in the second row).

A description will now be given of the operation according to the first embodiment.

When the central processing unit 1 provides an instruction for installation while the recording medium 5 is set in the recording medium reader 6, the OS and the like are read via the recording medium reader 6 and stored in the large-capacity memory 3. When the central processing unit 1 starts execution of the OS, the initial setting step ST1 is performed. The execution areas and the return time table are set up in the random access memory 2. In this state, the system waits for an input of an event (step ST2). When an event that demands reading from the return time table is input, the table is read via the recording medium reader 6 and stored in the large-capacity memory 3 (table storage control means).

Subsequently, when a new event demanding execution of the AP is input, the central processing unit 1 starts the designated AP in response to the input of the event so that the jobs of the AP are sequentially executed. When a time-out interruption request occurs, for example, in an input pending state of a job, that time-out interruption is added to the time-out list. When the jobs, including those generated in response to other event inputs, are removed from the cue, the central processing unit 1 makes a transition to the power saving mode so that the system waits for an input of an event again.

When the preset difference time elapses, the timer 4 issues a time-out interruption to the central processing unit 1. The central processing unit 1 determines that a time-out interruption event is input and performs the steps of the flowchart of Fig. 5. The central processing unit 1 first performs the return process step ST4 so as to make a transition from the power saving mode to the normal mode. In the setting process step ST5, the difference time listed at the head of the time-out list is set in the timer 4. In the job execution step ST6, the job at the first row is executed. The row containing the executed job is then deleted from the list. A determination is made in the time-out interrupt request determination step ST7 as to whether there is generated a time-out interrupt request. When it is determined that the time-out interruption request is generated, the new time-out interruption request is added to the time-out list in the time-out list updating step ST8. When the time-out list updating step ST8 is completed, a determination is made as to whether there is a cued job to be executed subsequently. When it is determined that there is a job to be executed, steps ST6 through ST8 are repeated until the cued jobs are removed. When it is determined at the completion of the time-out list updating step ST8 that there is no more cued jobs to be executed, the transition mode selecting step ST10 is performed so that the difference time listed in the first line (corresponding to the second line in Fig. 6) of the time-out list and the return time table are referred to so as to select, as the transition mode, a power saving mode (a) having the longest return time, from a group of one or a plurality of power saving modes (a) having a return time shorter than the difference time. In the transition mode setting step ST11, the selected transition mode (a) is set in the central processing unit 1. The central processing unit 1 makes a transition to the selected power saving mode and waits for an input of a new event.

By repeating the above-described steps, the central processing unit 1 executes a predetermined AP in response to an input of an event.

Fig. 7 is a timing chart showing an example of operation executed according to the first embodiment by the central processing unit 1 in accordance with the time-out list of Fig. 6. Referring to Fig. 7, (a) indicates a time line extending from a current time at "0"; (b) indicates a chart illustrating operating statuses of the central processing unit 1; and (c) indicates a chart indicating a time-out time set in the timer 4. Boxes in the chart (b) in which capital letters are entered indicate duration in which the jobs A, B, ..., E of Fig. 6 are being executed. Two-way arrows to which lower-case letters are attached indicate that the corresponding one of the power saving modes a, b, c of Fig. 3 is being set. Referring to the chart (c), a time out counting in the timer proceeds based on the numeral entered in the boxes. Upward arrows above the borders between the boxes indicate that a time-out interruption occurs.

As shown in Fig. 7, the central processing unit 1 of the computer system according to the first embodiment executes jobs in the time-out list in the listed order, in accordance with time-out interruption requests from the timer 4 at intervals defined by the difference times. The central processing unit 1 sets a new time-out time in the timer 4 whenever a time-out interruption is input. When the job is completed and an idle time occurs until the execution of the next job (i.e. until the input of an event such as a next time-out interruption), the power saving mode having the longest return time is selected from a group of power saving modes having a return time shorter than the difference time designated for the next time-out interruption so that the system waits for the next time-out interruption. When the next time-out interruption is input, the central processing unit returns from the power saving mode to the normal mode so as to execute the predetermined job.

Accordingly, an appropriate one of a plurality of power saving modes a, b, c prepared for the central processing unit 1 is selected such that the selection is not restricted by the shortest interruption interval occurring in the computer system. Thereby, the power consumption in the idle state of the central processing unit 1 is effectively reduced. The difference time designated for a time-out interruption from a job is managed based on a time-out list. It is thus known that time-out interruptions are timed to occur as listed in the time-out list. Undesired interruptions are prevented from occurring during the power saving mode so that the power consumption is reduced more effectively.

The power saving mode is selected to ensure that the central processing unit 1 returns to the normal mode before the occurrence of the next time-out interruption so as to be capable of starting the process responsive to the interruption. Therefore, failure to properly respond to a time-out interruption by returning to the normal mode too late is prevented. Two successive time-out interruptions are properly processed as separate interruptions.

Accordingly, the system according to the first embodiment is capable of effectively reducing power consumption of the central processing unit 1 while an application is being executed, by appropriately executing jobs based on time-out interruptions. Such a system is suitably used in a battery-driven condition.

### Second embodiment

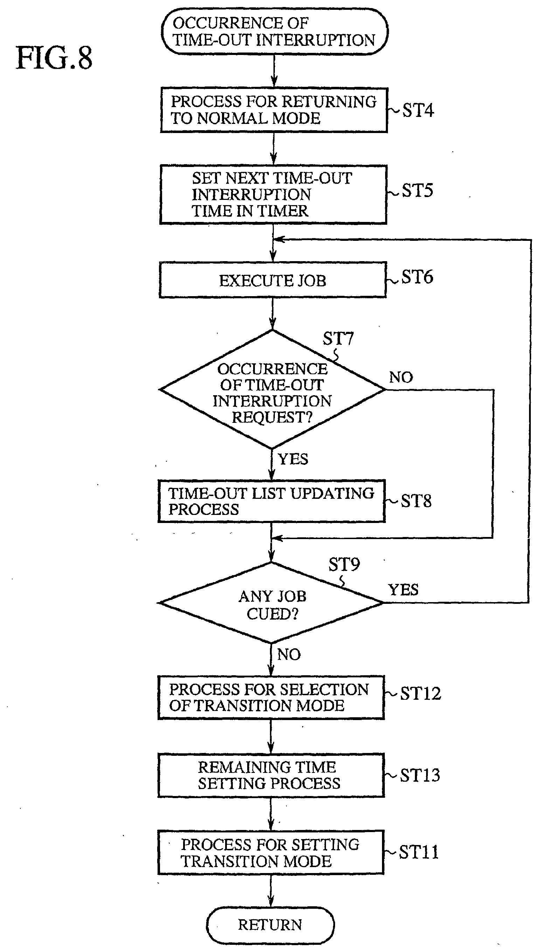

Fig. 8 is a flowchart showing a branch process performed when it is determined in step ST3 of the second embodiment that a time-out interruption is input in the form of an event. Referring to Fig. 8, step ST12 is a transition mode selection step (transition mode selection means) wherein the return time table and the timer 4 are referred to so as to select, of those power saving modes characterized by a return time shorter than the time that remains until the next time-out interruption, a power saving mode characterized by the longest return time. Step ST13 is a remaining time setting step (remaining time setting means) wherein a period of time determined by subtracting the return time of the transition mode from the remaining time is set in the timer 4. The system construction and steps executed by the OS are the same as those in the first embodiment so that the description thereof is omitted.

A description will now be given of the operation according to the second embodiment.

When it is determined subsequent to the time-out list updating step ST8 that there are no cued jobs to be executed, the return time table and the timer 4 are referred to in a transition mode selection step ST12 so as to select, of those power saving modes characterized by a return time shorter than the time that remains until the next time-out interruption, a power saving mode characterized by the longest return time. In the remaining time setting step ST13, a period of time determined by subtracting the return time of the transition mode from the remaining time is set in the timer 4. In the transition mode setting step ST11, the selected transition mode is set in the central processing unit 1 so that the central processing unit 1 is returned to the power saving mode to wait for a new event. The other aspects of the operation according to the second embodiment are the same as the corresponding aspects of the first embodiment so that the description thereof is omitted.

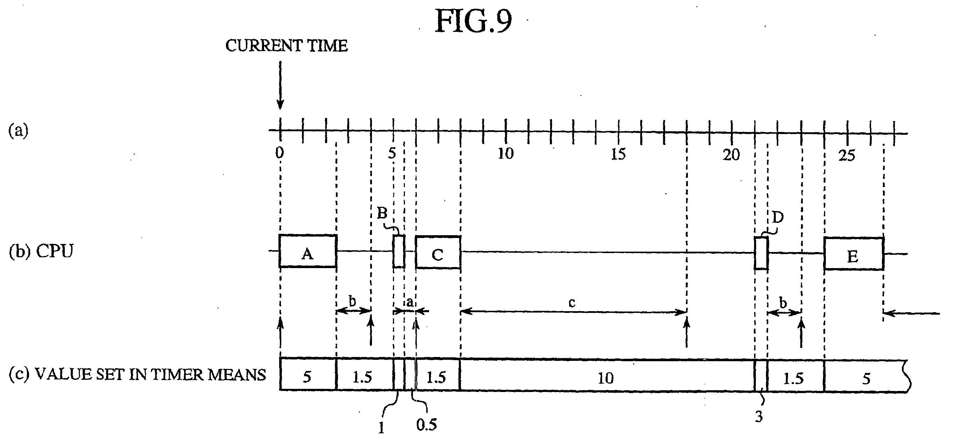

Fig. 9 is a timing chart showing an example of operation executed according to the second embodiment by the central processing unit 1 in accordance with the time-out list of Fig. 6. The legends entered are the same as those of Fig. 7 so that the description thereof is omitted. As shown in Fig. 7, in the computer system according to the second embodiment, the central processing unit 1, once in an idle state, switches to a power saving mode characterized by a return time shorter than a remaining period of time available at the start of the idle state. The value set in the timer is changed to a value obtained by subtraction of the return time of the power saving mode from the remaining period of time.

Accordingly, in a similar configuration as the first embodiment, the system according to the second embodiment is capable of effectively reducing power consumption while an application is being executed by appropriately executing jobs based on time-out interruptions. Moreover, since a time-out interruption is timed to occur earlier than scheduled point of time specified in the time-out list by selecting the power saving mode appropriately, the period of time by which the interruption is advanced being equal to the return time of the selected power saving mode. Accordingly, at a scheduled interruption time requested by the job, the central processing unit 1 is already in the normal mode for immediate processing of the job. It is thus ensured that execution of the job is started at the same point of time as when the switching to the power saving mode did not occur. Therefore, the period of time that elapses before the completion of the job is prevented from becoming extended and the processing performance of the central processing unit 1 is prevented from dropping.

### Third embodiment

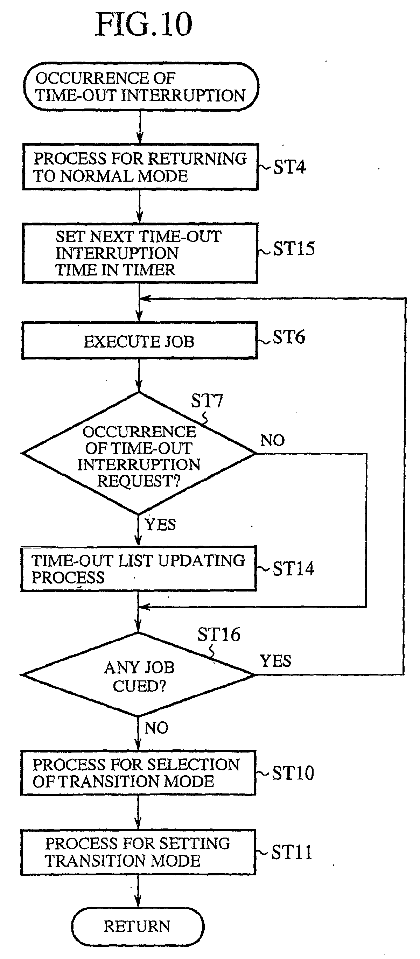

Fig. 10 is a flowchart showing a branch process performed when it is determined in step ST3 of the third embodiment for creation of a branch that a time-out interruption is input in the form of an event. Referring to Fig. 10, step ST14 is a time-out list updating step (list updating means) wherein a time-out list listing, for each job generating a time-out interruption, a time difference (difference time) from an immediately preceding time-out interruption and a permitted error time defining a margin in which the time-out interruption from that job may occur. Step ST15 is a setting process step (setting means) wherein, if it is determined, when setting the next time-out time subsequent to a current time-out interruption, that the difference time is longer than the permitted error time, listed jobs are successively examined until an accumulation of the difference time is longer than the permitted error time associated with the job. The accumulated time immediately preceding the satisfaction of this criterion is set in the timer 4. Step ST16 is a cued job determination step wherein a determination is made as to whether there are any cued jobs to be executed, including the job last examined in step ST15. The system construction and steps executed by the OS are the same as those in the first embodiment so that the description thereof is omitted.

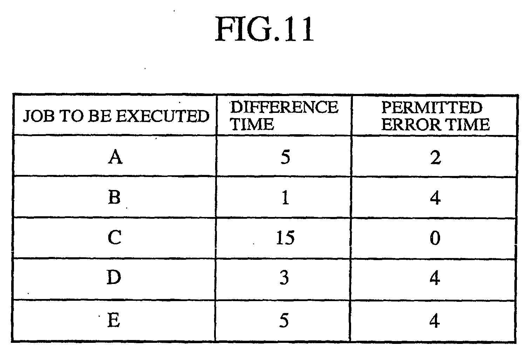

Fig. 11 shows an example of time-out list according to the third embodiment. Referring to Fig. 11, the right column lists the permitted error times, which are introduced in this embodiment and are not found in Fig. 6. Each row stores an error time permitted for the occurrence of the time-out interruption from the job listed in the next row.

A description will now be given of the operation according to the third embodiment.

When a time-out interruption is input from the timer 4 to the central processing unit 1, the central processing unit 1 determines that a time-out interruption is input in the form of an event and executes the steps of the flowchart of Fig. 10. In accordance with the illustrated flow, the central processing unit 1 executes the return process step ST4. Further, in a setting process step ST15, the central processing unit 1 sequentially examines the time-out list, starting at the first row, to compare the accumulated difference time with the permitted error time. Job-by-job search is continued until the accumulated difference time is longer than the permitted error time listed in the row. The accumulated time immediately preceding the satisfaction of this criterion is set in the timer 4.

In a job determination step ST16, a determination is made as to whether there are any cued jobs to be executed, including the job last examined in step ST15. One or a plurality of jobs including those jobs examined in step ST15 are executed in step ST6.

Whenever the job is executed, a determination is made in the time-out interruption request determination step ST7 as to whether a time-out interruption request occurs. When it is determined that the request occurs, the new time-out interruption request is added to the time-out list in the time-out list updating step ST14. The job, the difference time and the permitted error time are entered in the time-out list. The other aspects of the third embodiment are the same as the corresponding aspects according to the first embodiment so that the description thereof is omitted.

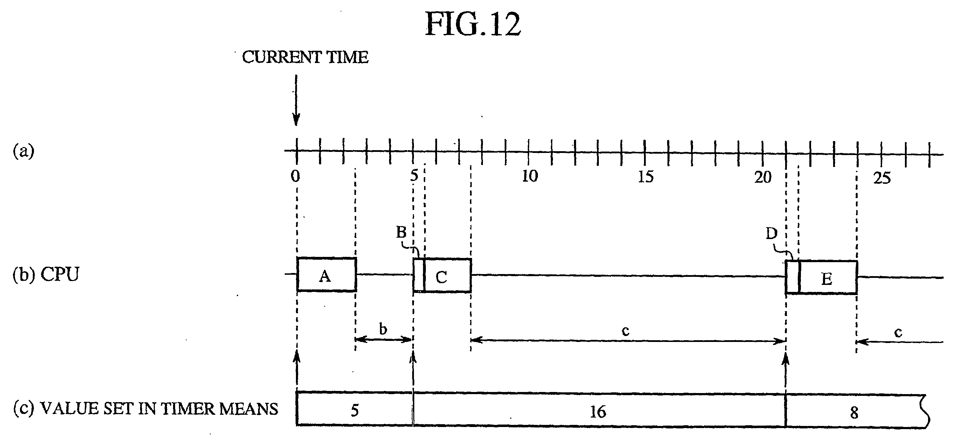

Fig. 12 is a timing chart showing an example of operation executed according to the third embodiment by a central processing unit in accordance with the time-out list of Fig. 11. The legends entered are the same as those of Fig. 7 so that the description thereof is omitted. As shown in Fig. 12, in the computer system according to the third embodiment, job c, characterized by a permitted error time shorter than the accumulated difference time, is executed following the job b in connection with the time-out interruption from the job B. 16 (=1+15) is set in the timer 4. Similarly, the job E is executed following the job D in connection with the time-out interruption from the job D. 8(=3+5) is set in the timer 4.

Accordingly, the frequency of time-out interruptions actually occurring is reduced as compared with the first embodiment. Combining a plurality of idle periods into a single idle period enables selection of a power saving mode characterized by lower power consumption as compared to a case where the plurality of idle periods are separated from each other on a time line. Therefore, the low power consumption performance is improved.

### Fourth embodiment

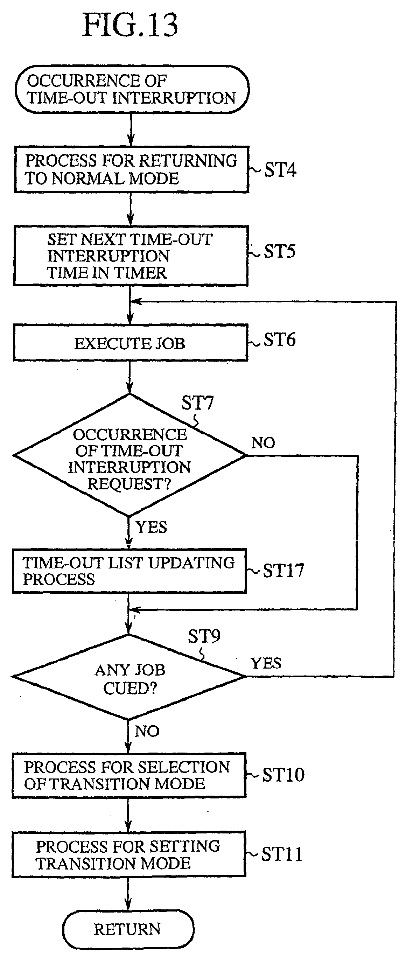

Fig. 13 is a flowchart showing a branch process performed when it is determined in step ST3 of the fourth embodiment for creation of a branch that a time-out interruption is input in the form of an event. Referring to Fig. 13, step ST17 is a time-out list updating step (list updating means) wherein, when there is a time-out interruption request from a new job, the time-out list is updated such that the new job is placed at a proper location determined by the associated time-out interruption request time. When it is determined that the permitted error time designated for the occurrence of the time-out interruption from the new job is longer than the time difference between the new job and the occurrence of time-out interruption from the immediately preceding job, the time-out interruption from the immediately preceding job is also used to trigger the time-out interruption from the new job. The system construction and steps executed by the OS are the same as those in the first embodiment so that the description thereof is omitted.

A description will now be given of the operation according to the fourth embodiment.

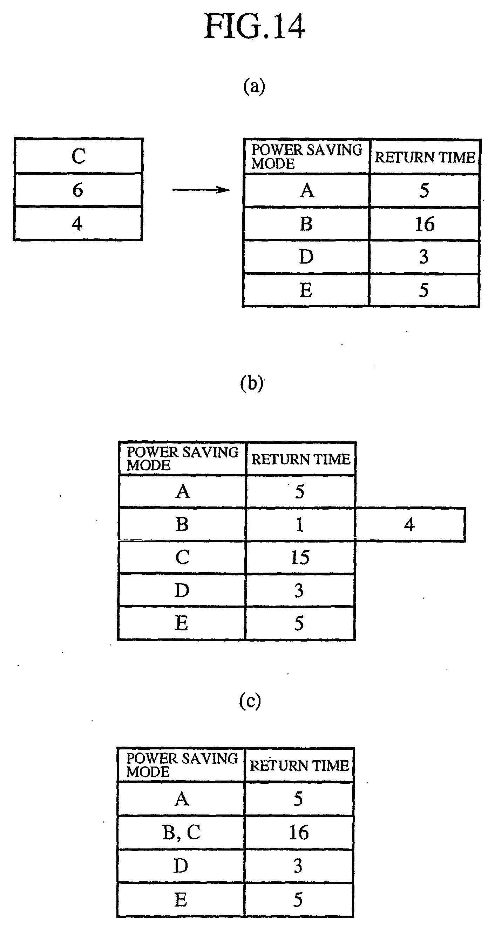

Fig. 14 shows how a list is updated in a time-out list updating step ST17 of the fourth embodiment. As shown in (a) of Fig. 14, when there is a time-out interruption request from a new job C, the job C is inserted into a proper location (between B and D) based on the time-out interruption request time, as shown in (b) of Fig. 14 so that the time-out list is updated ((b) of Fig. 14). Subsequently, a comparison is made between the permitted error time "4" designated for the job c and the difference time designated for the job C at execution of the job B ("1" in the second row of the list). In this case, since the permitted error time is longer than the difference time, the time list is updated in the time-out list updating step ST17 such that the jobs B and C are placed in the second row, as shown in (a) of Fig. 14. In transition from the stage indicated by (b) to the stage indicated by (c), the difference time in the combined second row is returned to the value of (c) of Fig. 14. The other aspects of the fourth embodiment are the same as the corresponding aspects of the first embodiment so that the description thereof is omitted. Since the jobs B and C are executed in response to the input of the time-out interruption from the job B, the central processing unit 1 operates in the same manner as illustrated in Fig. 12.

As described, according to the fourth embodiment, a comparison is made between the permitted error time "4" of the newly added job C and the difference time "1" since the job B. Upon determination that the permitted error time is longer than the difference time, for example, the time-out list is updated such that the new job C is executed in response to the input of time-out interruption from the job B. Accordingly, the same advantage available in the third embodiment is provided without storing the permitted error time in that the frequency of time-out interruptions actually occurring is reduced. Moreover, according to the fourth embodiment, there is no need to store the permitted error time in the time-out list.

### INDUSTRIAL APPLICABILITY

As described, the computer system and the computer-readable recording medium according to the invention uses the central processing unit provided, in addition to a normal mode, with a plurality of power saving modes characterized by respective power consumption levels and are capable of effectively reducing power consumption of the central processing unit while an application is being executed, by appropriately switching between the plurality of power saving modes while appropriately execute jobs based on time-out interruptions.

## Claims

1. A computer system comprising:
a central processing unit provided, in addition to a normal mode, with a plurality of power saving modes **characterized by** respective power consumption levels, and sequentially executing a plurality of jobs generating associated time-out interruption requests;
storage means storing a return time table mapping the plurality of power saving modes of said central processing unit into respective return time required for said central processing unit to return from the corresponding power saving mode to the normal mode;
list updating means updating a time-out list, chronologically listing the time-out interruption requests, based on the time-out interruption requests from the plurality of jobs executed by said central processing unit;
timer means outputting time-out interruptions to said central processing unit when the time-out time listed in the time-out list elapses;
setting means setting a next time-out time in said timer means whenever a time-out interruption occurs in accordance with the order listed in the time-out list;
transition mode selection means referring to the return time table when said central processing unit is put in an idle state, and selecting, as a transition mode, a power saving mode having the longest return time, from a group of one or a plurality of power saving modes having a return time shorter than the time-out time designated for the subsequent time-out interruption; and
operation mode control means controlling said central processing unit to operate in the transition mode since the start of the idle state until an input of the subsequent time-out interruption, and returning said central processing unit to the normal mode when the time-out interruption is generated.

2. A computer system comprising:
a central processing unit provided, in addition to a normal mode, with a plurality of power saving modes **characterized by** respective power consumption levels, and sequentially executing a plurality of jobs generating associated time-out interruption requests;
storage means storing a return time table mapping the plurality of power saving modes of said central processing unit into respective return time required for said central processing unit to return from the corresponding power saving mode to the normal mode;
list updating means updating a time-out list, chronologically listing the time-out interruption requests, based on the time-out interruption requests from the plurality of jobs executed by said central processing unit;
timer means outputting time-out interruptions to said central processing unit when the time-out time listed in the time-out list elapses;
setting means setting a next time-out time in said timer means whenever a time-out interruption occurs in accordance with the order listed in the time-out list;
transition mode selection means referring to the return time table when said central processing unit is put in an idle state, and selecting, as a transition mode, a power saving mode having the longest return time from a group of one or a plurality of power saving modes having a return time shorter than a period of time that remains until the subsequent time-out interruption,
remaining time setting means setting a period of time that remains after subtracting the return time of the transition mode from the remaining time; and
operation mode control means controlling said central processing unit to operate in the transition mode since the start of the idle state until an input of the subsequent time-out interruption, and returning said central processing unit to the normal mode when the time-out interruption is generated.

3. The computer system according to claim 1, wherein said list updating means updates a time-out list listing, for each job requesting a time-out interruption, a difference time from the immediately preceding time-out interruption and a permitted error time permitted for the occurrence of the time-out interruption from the listed job,
when it is determined, in setting a next time-out time subsequent to the time-out interruption, that the difference time is longer than the permitted error time, said setting means successively examine the listed jobs until an accumulation of the difference time is longer than the permitted error time associated with the job, so as to set an accumulated time immediately preceding the satisfaction of the above-mentioned criterion, and
said central processing unit successively executes, at the time-out interruption, time-out interruption processes from jobs including the last examined job.

4. The computer system according to claim 2, wherein said list updating means updates a time-out list listing, for each job requesting a time-out interruption, a difference time from the immediately preceding time-out interruption and a permitted error time permitted for the occurrence of the time-out interruption from the listed job,
when it is determined, in setting a next time-out time subsequent to the time-out interruption, that the difference time is longer than the permitted error time, said setting means successively examine the listed jobs until an accumulation of the difference time is longer than the permitted error time associated with the job, so as to set an accumulated time immediately preceding the satisfaction of the above-mentioned criterion, and
said central processing unit successively executes, at the time-out interruption, time-out interruption processes from jobs including the last examined job.

5. The computer system according to claim 1, wherein said list updating means updates the time-out list when there is a time-out interruption request from a new job such that the new job is added to the time-out list at a proper location determined by a time-out interruption request time, and combining time-out interruptions when an error time permitted for the occurrence of the time-out interruption from the new job is longer than a difference in time between the new job and an immediately preceding time-out interruption or a difference in time between the new job and an immediately following time-out interruption, such that the immediately preceding time-out interruption or the immediately following time-out interruption is processed as a time-out interruption from the new job.

6. The computer system according to claim 2, wherein said list updating means updates the time-out list when there is a time-out interruption request from a new job such that the new job is added to the time-out list at a proper location determined by a time-out interruption request time, and combining time-out interruptions when an error time permitted for the occurrence of the time-out interruption from the new job is longer than a difference in time between the new job and an immediately preceding time-out interruption or a difference in time between the new job and an immediately following time-out interruption, such that the immediately preceding time-out interruption or the immediately following time-out interruption is processed as a time-out interruption from the new job.

7. A computer readable recording medium storing a program causing a computer to function as:
table storage control means causing storage means to store a return time table mapping each of a plurality of power saving modes of a central processing unit into a respective return time required for the central processing unit to return to a normal mode;
list updating means updating a time-out list, chronologically listing the time-out interruption requests, based on the time-out interruption requests from the plurality of jobs executed by said central processing unit;
setting means setting a next time-out time in said timer means whenever a time-out interruption occurs in accordance with the order listed in the time-out list;
transition mode selection means referring to the return time table when said central processing unit is put in an idle state, and selecting, as a transition mode, a power saving mode having the longest return time, from a group of one or a plurality of power saving modes having return times shorter than the time-out time set designated for the subsequent time-out interruption; and
operation mode control means controlling said central processing unit to operate in the transition mode since the start of the idle state until an input of the subsequent time-out interruption, and returning said central processing unit to the normal mode when the time-out interruption is generated.

8. A computer readable recording medium storing a program causing a computer to function as:
table storage control means causing storage means to store a return time table mapping each of a plurality of power saving modes of a central processing unit into a respective return time required for the central processing unit to return to a normal mode;
list updating means updating a time-out list, chronologically listing the time-out interruption requests, based on the time-out interruption requests from the plurality of jobs executed by said central processing unit;
setting means setting a next time-out time in said timer means whenever a time-out interruption occurs in accordance with the order listed in the time-out list;
transition mode selection means referring to the return time table when said central processing unit is put in an idle state, and selecting, as a transition mode, a power saving mode having the longest return time from a group of one or a plurality of power saving modes having a return time shorter than a period of time that remains until the subsequent time-out interruption,
remaining time setting means setting a period of time that remains after subtracting the return time of the transition mode from the remaining time; and
operation mode control means controlling said central processing unit to operate in the transition mode since the start of the idle state until an input of the subsequent time-out interruption, and returning said central processing unit to the normal mode when the time-out interruption is generated.
